# FASCICULE DE BREVET EUROPEEN

(11) **EP 3 017 158 B1**
(45) Date de publication et mention de la délivrance du brevet: **28.02.2018**
(21) Numéro de dépôt: 14742265.3
(22) Date de dépôt: 24.06.2014
(51) Int. Cl.: F01N 3/18, F02D 41/02, F01N 3/08, F01N 3/20, F01N 11/00, F01N 13/02

(54) **SYSTÈME ET PROCÉDÉ DE RÉGÉNÉRATION D'UN MATÉRIAU ADSORBEUR D'OXYDES D'AZOTE**
SYSTEM UND VERFAHREN ZUR REGENERATION EINES NOX-ADSORBER
SYSTEM AND PROCESS FOR REGENERATION OF A NOX ADSORBING MATERIAL

(30) Priorité: 01.07.2013 FR 1356381
(43) Date de publication de la demande: 11.05.2016
(73) Titulaire: PSA Automobiles SA, 78300 Poissy (FR)
(72) Inventeur: CREHAN, Gabriel, F-92420 Vaucresson (FR)
(74) Mandataire: Renous Chan, Véronique
(86) Numéro de dépôt international: PCT/FR2014/051567
(87) Numéro de publication internationale: WO 2015/001221

(56) Documents cités:
- EP-A1- 2 063 077
- DE-A1-102009 014 360
- US-A1- 2009 120 072
- US-A1- 2013 111 886

## Description

La présente invention concerne le domaine de la dépollution des gaz d'échappement issus d'un moteur thermique, encore dénommé moteur à combustion interne.

Plus particulièrement, l'invention se rapporte à un système et à un procédé de régénération d'un matériau adsorbeur d'oxydes d'azote disposé en amont d'un catalyseur de réduction sélective, dans une ligne d'échappement de gaz émis par un moteur à combustion interne. L'invention se rapporte en outre à un véhicule automobile comprenant un tel système de régénération.

Les niveaux d'émissions polluantes, notamment des véhicules automobiles, sont réglementés. Les normes régissant ces niveaux d'émissions polluantes sont d'ailleurs de plus en plus drastiques. C'est pourquoi les véhicules munis de moteurs thermiques sont de plus en plus souvent équipés de moyens de dépollution qui comprennent un ensemble de catalyseurs transformant les constituants toxiques des gaz d'échappement, tels que le monoxyde de carbone (CO), les hydrocarbures imbrûlés (notés HC), ou les oxydes d'azote, en éléments moins toxiques comme la vapeur d'eau, l'azote et le dioxyde de carbone. Parmi les polluants rejetés dans l'environnement, les oxydes d'azotes (notés par la suite NOx) sont connus pour être à l'origine des pics de pollution. Ils provoquent les phénomènes de pluies acides et la formation d'ozone à basse altitude. Ils ont en outre des effets néfastes sur la santé humaine, pouvant notamment causer des problèmes d'irritation et d'inflammation de l'appareil respiratoire.

Dans ce contexte, les normes régissant les niveaux d'émissions polluantes d'oxydes d'azote NOx, de monoxyde de carbone CO et d'hydrocarbures HC sont de plus en plus sévères.

Pour satisfaire ces normes de plus en plus sévères, telles que la norme EURO 6 applicable en 2014, on prévoit des moyens de post-traitement spécifiques, encore dénommés organes de dépollution. Ainsi, par exemple, un catalyseur d'oxydation, notamment pour moteur diesel, noté par la suite DOC (de l'acronyme anglais pour « Diesel Oxydation Catalyst »), permet de traiter le monoxyde de carbone et les hydrocarbures imbrûlés, tandis qu'un filtre à particules, noté par la suite FAP, est utilisé pour filtrer les particules de suies.

On connait également des moyens spécifiques pour traiter les oxydes d'azote NOx. Ces moyens sont par exemple des catalyseurs de réduction sélective, encore dénommés SCR (acronyme anglais pour « Selective Catalytic Reduction »). Ces catalyseurs se présentent sous forme d'un filtre et permettent de réduire les oxydes d'azote NOx par l'ajout d'un réactif de réduction sélective dans les gaz d'échappement. Ce réactif est un agent réducteur. L'agent réducteur classiquement utilisé est l'ammoniac (NH₃). Il est obtenu par dissociation d'un précurseur, qui est en général de l'urée de synthèse en solution aqueuse à 32,5%, commercialisée sous la marque « AdBlue ». Cette solution d'urée est injectée dans la ligne d'échappement en amont du catalyseur SCR, au moyen d'un injecteur spécifique. Une architecture connue de ligne d'échappement consiste à placer le catalyseur de réduction sélective SCR en aval d'un catalyseur d'oxydation DOC. Ainsi, le catalyseur d'oxydation DOC permet d'oxyder le monoxyde de carbone contenu dans les gaz en sortie de moteur, en dioxyde de carbone moins toxique pour la santé, et de transformer les hydrocarbures HC en vapeur d'eau. Il permet donc d'obtenir des gaz d'échappement les plus propres possibles pour éviter l'encrassement du catalyseur SCR et du filtre à particules FAP situés en aval. Le filtre à particules FAP est indifféremment disposé en aval ou en amont du catalyseur SCR.

Les oxydes d'azote NOx étant très polluants, des procédés ont été élaborés pour améliorer le compromis NOx/CO₂, et notamment pour réduire les rejets de NOx tout en limitant fortement les rejets de CO₂. Un tel compromis amène à ordonner une injection d'urée à une certaine température des gaz d'échappement, mesurée au nez de l'injecteur d'urée, c'est-à-dire juste en amont de l'injecteur d'urée. Ce seuil de température des gaz d'échappement à partir duquel l'injection d'urée peut être ordonnée est fixé à la température la plus basse permettant la dissociation de l'urée. Ainsi, pour permettre une bonne conversion des NOx par l'ammoniac NH₃, le réducteur ou son précurseur n'est injecté que lorsque la température des gaz d'échappement est supérieure ou égale à 180°C. En dessous de cette température, la cinétique de conversion des oxydes d'azote NOx est trop lente.

Par conséquent, lorsque le réactif de réduction sélective choisi est une solution aqueuse d'urée, le catalyseur SCR ne peut pas être activé lorsque la température des gaz d'échappement est inférieure à 180°C, qui est la température seuil pour l'injection d'urée et pour la conversion des NOx en N₂. Cela implique que, dans les phases froides de fonctionnement du moteur, c'est-à-dire pour des températures de gaz d'échappement inférieures à 180°C, tous les oxydes d'azote NOx émis par le moteur sont rejetés dans l'atmosphère sans être traités. Il faut donc trouver un moyen de traiter les NOx émis quelles que soient les conditions de fonctionnement du moteur, et notamment quelle que soit la température des gaz d'échappement.

Pour cela, le document FR- 2 915 766 décrit une ligne d'échappement comportant un matériau stockeur d'oxydes d'azote NOx, encore dénommé sous l'acronyme anglais PNA pour « Passive NOx Adsorbeur ». Ce matériau PNA est capable de capter les oxydes d'azote lorsque les gaz d'échappement ne sont pas suffisamment chauds pour pouvoir activer le catalyseur SCR. Ce matériau PNA, stockeur de NOx, désorbe ensuite les NOx lorsque la température des gaz d'échappement devient supérieure à la température seuil de désorption du matériau PNA qui est elle-même supérieure à la température d'activation du catalyseur SCR. Ainsi, suite à un démarrage à froid, les NOx émis par le moteur sont adsorbés puis, dès lors que la température de la ligne d'échappement le permet, les NOx sont désorbés et véhiculés vers le catalyseur SCR pour être détruits.

Cependant, dans certaines conditions, telles qu'un long roulage en dessous de la température de désorption du matériau PNA, le matériau peut saturer et ne plus adsorber les NOx émis. Cela pose problème vis-à-vis des cycles d'homologation à venir, notamment celui de la norme Euro 6.2 qui sera applicable à partir de 2017, qui nécessite un traitement complet des NOx dans toutes les situations. Ainsi, par exemple, il faut être capable de retenir les NOx émis lors d'un démarrage à froid, alors que le matériau PNA n'a pas pu relâcher les NOx adsorbés lors du roulage précédent, du fait d'un long roulage en dessous de la température de désorption, ou du fait d'une circulation urbaine impliquant de multiples arrêts et redémarrages automatiques selon la technologie connue sous la dénomination « stop and start » (marque déposée). Dans ce cas, les NOx émis par le moteur n'étant ni adsorbés par le matériau PNA, ni traités par le catalyseur SCR, ils passent directement dans l'atmosphère. Une telle situation n'est plus tolérable vis-à-vis des nouveaux cycles d'homologation.

Le document EP-1 027 919 propose une solution consistant à régénérer régulièrement le matériau PNA adsorbeur de NOx en le chauffant au-dessus de sa température de désorption afin qu'il désorbe les NOx vers le catalyseur SCR. Pour cela, le document décrit que la régénération du matériau est provoquée périodiquement, avant que le pic de saturation du matériau PNA soit atteint.

Cette solution présente cependant des inconvénients. En effet, le fait de désorber périodiquement le matériau PNA, sans tenir compte de la température des gaz d'échappement dans la ligne d'échappement peut poser problème. Si la température de la ligne d'échappement est trop basse pour permettre une activation du catalyseur SCR, alors tous les NOx désorbés sont émis dans l'atmosphère sans être traités par le catalyseur SCR. Dans le cas où le catalyseur SCR est actif et peut traiter les NOx désorbés, le fait de chauffer régulièrement le matériau PNA pour le régénérer, alors même que son pic de saturation n'est pas atteint, est très pénalisant en termes de consommation de carburant et d'émission de CO₂. En effet, un tel chauffage peut être provoqué par injection tardive de carburant dans la chambre à combustion, ou par actionnement sur la boucle EGR pour changer la richesse en oxygène du mélange air/carburant dans la chambre à combustion par exemple. Dans tous les cas, le chauffage du matériau PNA au-delà de sa température seuil de désorption entraine une surconsommation de carburant et une élévation de l'émission de dioxyde de carbone, gaz à effet de serre bien connu, que l'on cherche justement à limiter. Il est par ailleurs connu du document US 2009 120072 un système de régénération d'un piège à NOx disposé dans une ligne d'échappement en amont d'un catalyseur de réduction sélective SCR, le système comprenant une unité de contrôle apte à commander une mise en chauffe de la ligne.

L'invention a donc pour but de remédier à au moins un des inconvénients de l'art antérieur. En particulier, l'invention vise à proposer un système de régénération d'un matériau adsorbeur d'oxydes d'azote, disposé dans une ligne d'échappement en amont d'un catalyseur SCR, qui permette d'une part, de limiter les surconsommations de carburant et les émissions de dioxyde de carbone générées par la régénération et d'autre part, de détruire tous les oxydes d'azote désorbés durant la régénération.

A cet effet, l'invention a pour objet un système de régénération d'un matériau PNA adsorbeur d'oxydes d'azote NOx disposé dans une ligne d'échappement, en amont d'un catalyseur de réduction sélective SCR, ledit matériau adsorbeur PNA formant avec ledit catalyseur SCR un système de dépollution PNA-SCR apte à éliminer des oxydes d'azote NOx contenus dans des gaz d'échappement émis par un moteur à combustion interne dans ladite ligne d'échappement, ledit système comprenant :
- un module estimateur apte à déterminer un taux de destruction, par ledit système de dépollution PNA-SCR, des NOx émis par ledit moteur,
- un module comparateur apte à comparer le taux de destruction déterminé à une valeur de taux seuil,
- une unité de commande apte à commander le chauffage de ladite ligne d'échappement en fonction du résultat de la comparaison, ladite unité de commande étant apte à déterminer le taux de régénération du matériau PNA, et apte à ajuster une quantité de réactif de réduction sélective à injecter dans la ligne d'échappement (80) en fonction de ce taux de régénération (TR) pour permettre une élimination des NOx désorbés vers le catalyseur SCR

Ainsi, le système de régénération provoque la régénération du matériau adsorbeur de NOx uniquement lorsque celui-ci sature et/ou lorsque le système de dépollution PNA-SCR présente une baisse de rentabilité et une diminution du taux de destruction des NOx. Les régénérations forcées ne sont donc effectuées que lorsqu'elles sont nécessaires. Le système selon l'invention permet de diminuer la fréquence avec laquelle les régénérations sont réalisées, de sorte qu'il permet de limiter les surconsommations de carburant et les émissions de CO₂.

On comprend par le terme « destruction » le fait que les NOx disparaissent d'abord par stockage (éventuel) par adsorption par le PNA puis par réduction (chimique) par le SCR en des espèces chimiques moins/pas polluantes.

Selon d'autres caractéristiques optionnelles du système de régénération :
- le module estimateur estime le taux de destruction des NOx à partir de données fournies par des capteurs de contrôle et/ou à partir d'une modélisation établie en fonction d'un taux de NOx émis par le moteur et d'un taux de NOx émis en sortie de la ligne d'échappement,
- le module estimateur est en outre apte à déterminer la température des gaz d'échappement à partir de données fournies par au moins un capteur de contrôle et /ou à partir d'une modélisation, ledit module comparateur est en outre apte à comparer ladite température des gaz à une première valeur seuil minimum correspondant à une température d'activation du catalyseur SCR, et à une deuxième valeur seuil maximum correspondant à une température seuil de désorption du matériau PNA, et en ce que l'unité de commande est apte à commander le chauffage de la ligne d'échappement en fonction du résultat des comparaisons,
- le système est avantageusement hébergé dans un calculateur de contrôle moteur d'un véhicule automobile.

L'invention se rapporte en outre à un procédé de régénération d'un matériau PNA adsorbeur d'oxydes d'azote NOx disposé dans une ligne d'échappement, en amont d'un catalyseur de réduction sélective SCR, ledit matériau adsorbeur PNA formant avec ledit catalyseur SCR un système de dépollution PNA-SCR apte à éliminer des oxydes d'azote NOx contenus dans des gaz d'échappement émis par un moteur à combustion interne dans ladite ligne d'échappement, ledit procédé consistant à stocker les NOx dans le matériau adsorbeur PNA en dessous d'une température seuil de désorption et à chauffer périodiquement la ligne d'échappement à une température supérieure à ladite température seuil de désorption dudit matériau adsorbeur PNA, afin de le régénérer, ledit procédé étant caractérisé en ce qu'il comprend en outre les étapes suivantes :
- déterminer un taux de destruction, par ledit système de dépollution PNA-SCR, des NOx émis par ledit moteur,
- comparer le taux de destruction déterminé à une valeur de taux seuil,
- en fonction du résultat de la comparaison, activer une mise en chauffe de ladite ligne d'échappement à une température supérieure à ladite température seuil de désorption du matériau PNA afin de désorber les NOx vers le catalyseur SCR pour être détruits, et, lorsque le chauffage de la ligne d'échappement est activé, une étape supplémentaire consiste à déterminer le taux de régénération du matériau PNA, et à ajuster une quantité de réactif de réduction sélective à injecter dans la ligne d'échappement en fonction de ce taux de régénération pour permettre une élimination des NOx désorbés vers le catalyseur SCR.

Selon d'autres caractéristiques optionnelles du procédé :
- le procédé comprend en outre les étapes suivantes : déterminer la température des gaz d'échappement ; comparer la température des gaz d'échappement préalablement déterminée à une première valeur seuil minimum correspondant à une température d'activation du catalyseur SCR, et à une deuxième valeur seuil maximum correspondant à ladite température seuil de désorption du matériau PNA ; en fonction du résultat des comparaisons, activer le chauffage de la ligne d'échappement,
- la température des gaz d'échappement est déterminée à partir de l'un au moins des moyens suivants : une modélisation de la température des gaz dans la ligne d'échappement, une mesure de la température des gaz dans la ligne d'échappement, une modélisation du débit des gaz dans la ligne d'échappement, une mesure du débit des gaz dans la ligne d'échappement,
- lorsque le taux de régénération atteint une valeur seuil de régénération et que la température des gaz d'échappement est supérieure à ladite température de désorption pendant une durée seuil prédéfinie, le chauffage de la ligne d'échappement est désactivé,
- ladite durée seuil est prédéfinie en fonction de l'âge du matériau PNA,
- la valeur seuil de taux de destruction de NOx est prédéterminée à partir d'une modélisation établie en fonction de l'un au moins des paramètres suivants : âge du matériau PNA, âge du catalyseur SCR, capacités de stockage du matériau PNA, distance parcourue depuis la dernière régénération du matériau PNA.

L'invention se rapporte enfin à un véhicule automobile comprenant un moteur à combustion interne et une ligne d'échappement des gaz émis par ledit moteur, ladite ligne d'échappement comprenant au moins un matériau PNA adsorbeur d'oxydes d'azote NOx disposé en amont d'un catalyseur de réduction sélective SCR, selon le sens d'écoulement des gaz dans ladite ligne d'échappement, ledit véhicule automobile étant caractérisé en ce qu'il comprend en outre un système de régénération tel que décrit ci-dessus, apte à mettre en oeuvre le procédé de régénération tel que décrit ci-dessus.

Selon une autre caractéristique du véhicule, le moteur est un moteur à combustion pauvre.

D'autres particularités et avantages de l'invention apparaitront à la lecture de la description suivante faite à titre d'exemple illustratif et non limitatif, en référence aux

Figures annexées qui représentent :
- La Figure 1, un schéma d'une architecture de ligne d'échappement de gaz d'échappement, issus d'un moteur thermique, ladite ligne étant équipée d'un système de régénération selon l'invention,
- La Figure 2, un organigramme des étapes d'un procédé de régénération d'un matériau PNA adsorbeur de NOx selon l'invention.

Par oxydes d'azote NOx on entend notamment les oxydes du type protoxyde N₂O, sesquioxyde N₂O₃, pentoxyde N₂O₅, monoxyde NO et dioxyde NO_{2.}

Par combustion « pauvre » on entend des gaz d'échappement riches en oxygène et en gaz oxydants.

Par « conditions froides de fonctionnement », on entend tout mode de combustion pauvre du moteur qui ne génère pas une température des gaz d'échappement dans la ligne d'échappement suffisamment chaude pour permettre une activation du catalyseur SCR et une désorption des NOx par le matériau PNA.

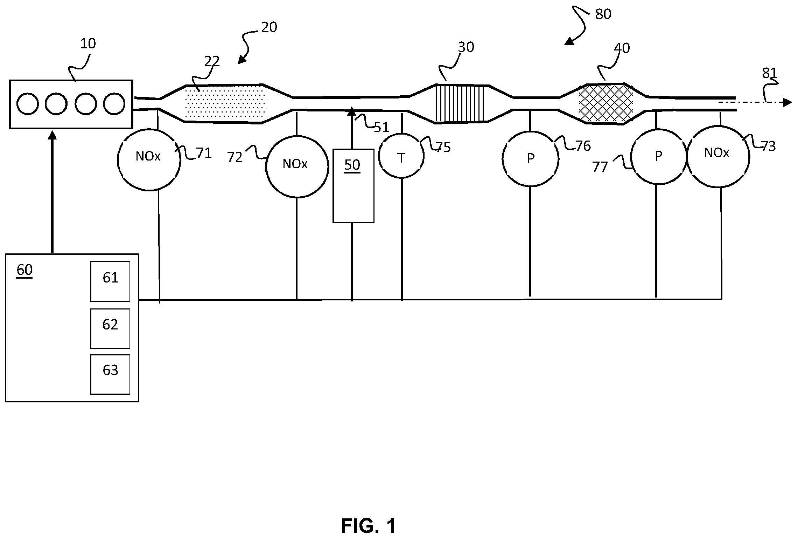

La Figure 1 schématise une ligne d'échappement, référencée 80, associée à un moteur à combustion interne 10 (encore dénommé moteur thermique par la suite), et à combustion pauvre. Cette ligne 80 comprend différents organes de dépollution 20, 30, 40 pour traiter les gaz 81 d'échappement afin d'éliminer tous les polluants.

La ligne d'échappement comprend un organe 20 de catalyse d'oxydation DOC. Ce catalyseur peut prendre la structure d'un monolithe extrudé de filtration.

La ligne d'échappement 80 comprend en outre un organe 30 de réduction sélective SCR. Selon le sens de l'écoulement des gaz d'échappement 81 dans la ligne d'échappement 80, l'organe de réduction sélective 30 est disposé en aval du catalyseur d'oxydation DOC 20. Les expressions « catalyseur SCR » ou « réduction catalytique sélective » sont indifféremment utilisées dans la suite de la description pour décrire cet organe 30 de dépollution. Ce catalyseur SCR 30 présente classiquement une configuration de pain monolithique pour laquelle les gaz d'échappement 81 s'écoulant dans la ligne d'échappement 80 lèchent les parois du pain.

Un injecteur 51 de réactif de réduction sélective est avantageusement disposé en aval du catalyseur d'oxydation DOC 20 et en amont du catalyseur SCR 30. L'injecteur 51 est avantageusement connecté à un réservoir 50 de stockage du réactif de réduction sélective. Le réactif permettant la réduction catalytique sélective peut se présenter sous forme liquide ou gazeuse. Il peut avantageusement être choisi dans le groupe de réactifs choisi parmi CO, HC, les alcools, les glycols, les glycérols, les esters, les acides, l'ammoniac, l'urée, la guanidine, un sel de guanidine. De préférence le réducteur est de l'urée de synthèse en solution aqueuse à 32,5%, commercialisée sous la marque « AdBlue ». Cette solution d'urée est injectée dans la ligne d'échappement en amont du catalyseur SCR 30 au moyen de l'injecteur spécifique 51. L'injection a lieu suffisamment loin du catalyseur SCR, afin que l'urée puisse se décomposer thermiquement, en NH₃, dans les gaz d'échappement avant d'atteindre le catalyseur SCR 30 pour traiter les NOx.

La ligne d'échappement 80 comprend en outre un filtre à particules de suies FAP 40. Selon le sens de l'écoulement des gaz d'échappement 81 dans la ligne d'échappement 80, le filtre à particules 40 est disposé en aval du catalyseur de réduction sélective SCR. Il peut toutefois être disposé en amont du catalyseur SCR 30. Le terme « filtre à particules » et l'acronyme « FAP » sont indifféremment utilisés dans la suite de ce document pour désigner ce même organe de dépollution 40. Le FAP présente classiquement une configuration de pain monolithique avec des parois traversées par les gaz d'échappement 81. De manière facultative, le FAP peut être un FAP régénérant à l'aide d'un additif de carburant. Ce type d'additif de carburant pour la régénération de FAP est connu sous l'acronyme anglais FBC pour « Fuel Born Catalyst ». Cet additif de carburant peut être choisi dans le groupe d'additif de carburant consistant en des oxydes métalliques d'alcalins, d'alcalino-terreux, de métaux de transition, de semi-métaux, de lanthanides, d'actinides, de métaux précieux et des mélanges de ceux-ci.

La présence d'un enduit catalytique SCR supplémentaire sur le FAP permet de contribuer efficacement à la diminution de l'émission des NOx dans le cas de fonctionnement du moteur à haute température. Cette synergie est particulièrement avantageuse dans les applications de la ligne d'échappement pour les petites voitures. En effet, pour de tels véhicules automobiles, on peut souhaiter réduire le volume des pains sans diminuer l'efficacité de la fonction de diminution de l'émission des NOx.

Des capteurs de pression 76, 77 disposés respectivement en amont et en aval du FAP 40 permettent de maitriser plus précisément la phase de régénération du FAP.

De manière avantageuse, un matériau adsorbeur passif de NOx, connu sous l'acronyme anglais « PNA » pour « Passive NOx Adsorber », est disposé dans la ligne d'échappement 80 en amont du catalyseur SCR, selon le sens d'écoulement des gaz 81 dans la ligne 80. Il peut avantageusement être disposé dans le catalyseur d'oxydation DOC 20. Dans ce cas, le matériau PNA se présente avantageusement sous la forme d'un enduit qui peut être appliqué sur le monolithe de constitution du catalyseur d'oxydation DOC 20. La Figure 1 schématise une telle situation où le catalyseur d'oxydation DOC, référencé 20, comprend un monolithe extrudé sur lequel une couche d'enduit catalytique, correspondant au matériau adsorbeur PNA, référencé 22, est appliquée. Les expressions « PNA » et « adsorbeur de NOx » sont indifféremment utilisées dans la suite de la description pour désigner ce matériau. Le matériau PNA peut être choisi parmi :
- les métaux alcalins, les métaux alcalino-terreux, les terres rares, les métaux de transition, ou un mélange d'oxyde de deux au moins de ceux-ci ;
- des zéolites, des zéolites dopées par un métal, de préférence par un oxyde de Al, Ce, Zr, Cu, Fe, Mn, W, Cu ou leur mélange ;
- des pérovskites, des argiles, du carbone et ou des oxydes ;
- des oxydes de lanthanides ou d'actinites ou leurs mélanges.

Ce matériau PNA présente l'avantage d'adsorber les NOx à basse température, pendant les phases froides de fonctionnement du moteur tant que le catalyseur SCR n'est pas activé. Typiquement, il adsorbe des NOx pour des températures inférieures à 350°C. Au-delà de cette température, le matériau désorbe les NOx, qui sont alors véhiculés par les gaz d'échappement vers le catalyseur SCR 30 disposé en aval, pour être traités. Le matériau PNA adsorbeur se vide alors des NOx. On dit qu'il se régénère et reprend ainsi une capacité à adsorber de nouveau les NOx. Le matériau PNA présente un pic de désorption des NOx compris entre 250°C et 350°C. La température de ce pic est directement reliée à la formulation chimique du matériau PNA utilisé. Ainsi, pour un matériau à base d'oxyde de Cérium, CeOx, le pic d'adsorption se situe à une température de l'ordre de 300°C.

Le matériau adsorbeur de NOx dans le DOC 20 contribue à la diminution de l'émission de NOx à faible température du fait du captage des NOx à faible température. Le captage des NOx à faible température permet d'éviter l'émission de NOx trop froids pour être traités par le catalyseur SCR 30 ou le FAP 40 lorsque ce-dernier comprend un enduit catalytique SCR. Lorsque les gaz d'échappement sont à une température suffisante pour que le catalyseur SCR soit pleinement opérationnel, ce-dernier compense avantageusement la désorption des NOx à haute température du matériau PNA. Les effets de la présence du matériau PNA dans le DOC 20 sont d'autant plus importants lors de la présence de métaux précieux dans le DOC 20, les métaux précieux augmentant les propriétés d'adsorption à basse température.

Le DOC 20 peut être un catalyseur à trois voies. Un catalyseur à trois voies réalise la catalyse de réactions chimiques contribuant à la diminution de la quantité de trois polluants dans les gaz d'échappement 81, les NOx, le monoxyde de carbone CO, et les hydrocarbures imbrûlés (HC). Un tel DOC correspond par exemple à celui décrit dans le document EP-A-0 341 832. Le catalyseur DOC 20 comprend de préférence des oxydes choisis parmi : Al₂O₃, TiO₂, ZrO₂, CeO₂, Y₂O₃, SiO₂ et leurs mélanges. Le DOC peut aussi comprendre des métaux précieux pour augmenter l'effet de catalyse de réaction chimique. Les métaux précieux utilisés sont des métaux choisi parmi Au, Ag, Ir, Ru, Rh, Pt, Pd. Ces métaux précieux servent aussi de sites de réduction des NOx en présence de la couche catalytique de matériau PNA. Sur la Figure 1 est schématisé un DOC 20 comprenant un pain monolithique enduit d'une couche catalytique de matériau PNA 22. Cette couche catalytique comprend en outre des métaux précieux tels que du Pd pour éliminer le CO et les HC, et du Pt pour favoriser l'adsorption et la désorption des NOx par le matériau de constitution du PNA.

La ligne d'échappement comprend en outre un système de régénération 60 permettant de provoquer la régénération du matériau PNA lorsque ce-dernier sature et la destruction des NOx dans la ligne d'échappement. Pour cela, le système de régénération 60 comprend une unité de commande 63 qui peut par exemple être réalisée sous forme d'un processeur convenablement programmé. Un ensemble d'instructions logicielles permet au processeur d'effectuer différentes étapes décrites dans ce qui suit en relation avec l'unité de commande 63 du système de régénération 60. De manière avantageuse, le système de régénération 60 est hébergé par le calculateur de contrôle moteur du véhicule.

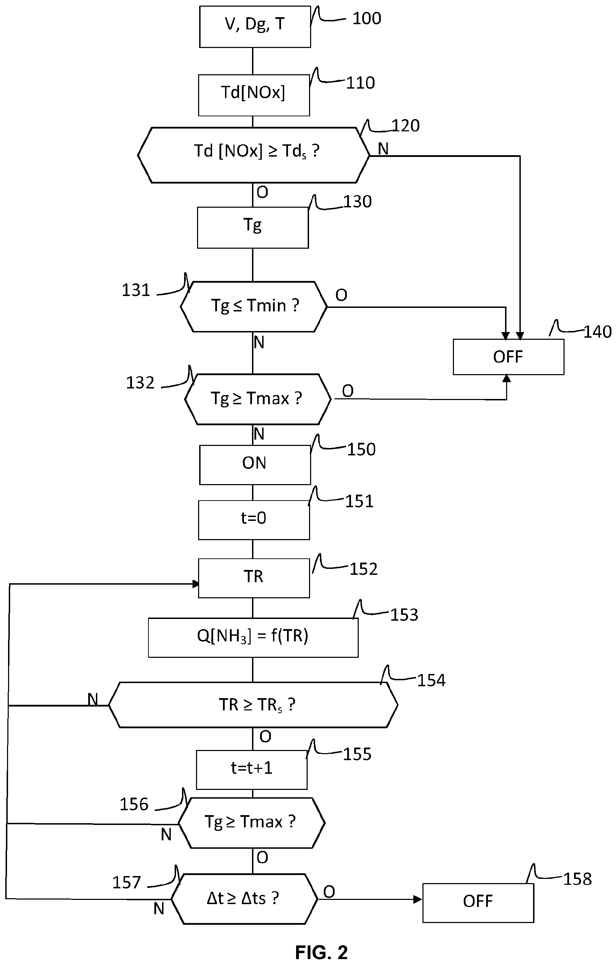

Le fonctionnement du système de régénération est avantageusement décrit dans ce qui suit en regard des Figures 1 et 2 qui schématisent respectivement le système de régénération intégré dans la ligne d'échappement 80 et les étapes du procédé de régénération mis en oeuvre par le système.

La température d'activation du catalyseur SCR dépend notamment de son âge mais aussi du type de réactif de réduction sélective utilisé. En général, la température d'activation varie entre 150°C et 200°C. Ainsi, par exemple lorsque le réactif de réduction sélective utilisé est une solution aqueuse d'urée, celle-ci ne se dissocie en NH₃ qu'à partir de 180°C. Par conséquent, dans ce cas, l'urée n'est injectée qu'à compter de cette température et le catalyseur SCR n'est donc actif qu'à partir de 180°C.

Le système de régénération selon l'invention permet de régénérer le matériau PNA lorsque ce-dernier sature et ne peut plus adsorber de NOx. Pour déterminer le moment où le PNA sature, le système comprend un module estimateur 61 qui permet de déterminer le taux de destruction Td[NOx] des NOx par le système de dépollution formé par le matériau PNA 22 et le catalyseur SCR 30 (étape 110). Pour déterminer ce taux de destruction, le module estimateur 61 se base d'une part sur la quantité de NOx émis par le moteur 10 thermique à combustion pauvre et d'autre part, sur la quantité de NOx émis en sortie de la ligne d'échappement 80. La quantité de NOx émis par le moteur 10 peut être obtenue soit par une mesure, au moyen d'un détecteur de NOx 71 disposé en sortie du moteur 10, soit par une estimation à partir d'une modélisation en fonction d'un ou plusieurs paramètres moteurs, tels que la vitesse v de rotation du moteur, le débit de gaz d'échappement Dg, la température T du moteur, dont les valeurs sont obtenues au moyen de capteurs de contrôle du véhicule par exemple (étape 100). La quantité de NOx émis en sortie de la ligne d'échappement est par exemple obtenue par une mesure au moyen d'un détecteur de NOx 73 disposé en aval du catalyseur SCR.

A partir de ces quantités de NOx émis respectivement par le moteur 10 et en sortie de la ligne d'échappement 80, le module estimateur 61 détermine, à l'étape 110, le taux Td[NOx] de destruction des NOx par le système de dépollution PNA-SCR.

La valeur du taux Td[NOx] de destruction ainsi déterminée est alors comparée, grâce à un module comparateur 62, à une valeur seuil Tds (étape 120). Cette valeur seuil Tds du taux de destruction des NOx est avantageusement prédéfinie à partir d'une modélisation prenant en compte l'un au moins des paramètres suivants : l'âge du matériau PNA, l'âge du catalyseur SCR, les dimensions et la capacité de stockage du matériau PNA, ou la distance parcourue depuis la dernière régénération du matériau PNA. Cette valeur seuil Tds diminue avec l'âge des organes de dépollution qui deviennent moins efficaces en vieillissant.

Lorsque le taux Td[NOx] de destruction préalablement déterminé du système de dépollution PNA-SCR devient inférieur à cette valeur seuil Tds prédéfinie, cela signifie que le matériau PNA n'arrive plus à adsorber les NOx correctement et qu'il sature. Si le matériau PNA ne sature pas, l'unité de commande 63 interdit le chauffage de la ligne d'échappement (étape 140 : OFF).

Lorsque le matériau PNA sature, le module estimateur 61 détermine alors (étape 130) la température Tg des gaz d'échappement 81 dans la ligne d'échappement 80. Cette température des gaz peut être mesurée au moyen d'au moins un capteur 75 avantageusement disposé en entrée du catalyseur SCR. De préférence, si la température des gaz est mesurée, elle est mesurée au moyen de deux capteurs disposés respectivement au sein du catalyseur SCR et au sein du DOC contenant le matériau PNA afin d'avoir des mesures très précises de la température au sein des deux organes participant à l'élimination des NOx. La température des gaz peut aussi être estimée à partir de l'un au moins des moyens suivants : une modélisation de la température des gaz dans la ligne d'échappement, une modélisation du débit des gaz dans la ligne d'échappement, une mesure du débit des gaz dans la ligne d'échappement.

Le module comparateur 62 du système de régénération 60 permet alors de comparer la température Tg des gaz précédemment déterminée à une à une première valeur seuil minimum Tmin (étape 131) correspondant à la température d'activation du catalyseur SCR, et à une deuxième valeur seuil maximum Tmax (étape 132) correspondant à la température seuil de désorption du matériau PNA. Lorsque la température Tg des gaz d'échappement est inférieure à la température Tmin d'activation du catalyseur SCR, le catalyseur ne peut pas être activé. Par conséquent, dans ce cas, l'unité de commande 63 du système de régénération 60 interdit le chauffage de la ligne d'échappement (étape 140 : OFF) puisqu'un tel chauffage reviendrait à désorber tous les NOx adsorbés dans le PNA sans pouvoir les détruire dans le catalyseur SCR situé en aval. De même, lorsque la température Tg des gaz d'échappement est supérieure à la température Tmax de désorption du PNA, le fonctionnement de la ligne d'échappement 80 se trouve dans des conditions classiques dans lesquelles le catalyseur SCR 30 est actif, sa température d'activation étant inférieure à la température de désorption du PNA. Dans ce cas, les NOx se désorbent naturellement du PNA, sans qu'il y ait besoin de le chauffer, puis ils s'écoulent avec les gaz d'échappement vers le catalyseur SCR 30 où ils sont traités et éliminés grâce à l'injection du réactif de réduction sélective en amont du catalyseur SCR. Dans ce cas aussi l'unité de commande 63 du système de régénération 60 interdit donc l'activation de la régénération forcée du matériau PNA (étape 140 :OFF).

Lorsque la température Tg des gaz est comprise entre la température Tmin d'activation de catalyseur SCR et la température Tmax de désorption du PNA, les conditions sont favorables pour une régénération du matériau PNA. Dans ce cas, et lorsque le matériau PNA sature, l'unité de commande 63 du système de régénération 60 actionne le chauffage de la ligne d'échappement (étape 150 : ON) afin de provoquer la désorption des NOx et de forcer ainsi la régénération du matériau PNA.

Un tel chauffage de la ligne d'échappement peut être réalisé en modifiant la combustion du moteur selon différentes méthodes qui peuvent éventuellement être combinées. Une première méthode consiste à retarder l'injection de carburant pour augmenter la température au sein de la ligne d'échappement. Une deuxième méthode consiste à agir sur la boucle EGR pour modifier le mélange air/carburant et augmenter la richesse en oxygène dans la chambre à combustion afin d'accroitre la vitesse de combustion et donc la température de la ligne d'échappement. Une troisième méthode consiste à agir sur la boucle EGR pour limiter le flux d'air pendant les phases de décélération et limiter ainsi les pertes de calories dans la ligne d'échappement. Une autre méthode encore peut consister à accroitre la richesse des gaz dans la ligne d'échappement. Dans ce dernier cas une large quantité d'hydrocarbures HC peut être oxydée dans l'organe DOC/PNA entrainant alors une augmentation de la température au sein du DOC/PNA. D'autre part, dans ce cas, un excès de HC peut en outre avantageusement contribuer à la destruction des NOx pendant la phase de désorption.

Ce chauffage a en outre des répercussions sur le catalyseur SCR 30, dont les capacités sont alors boostées. Le catalyseur SCR 30 étant sensiblement chauffé, il voit alors son taux de conversion des NOx en N₂ augmenté.

D'autres étapes supplémentaires, facultatives, permettent en outre d'optimiser le temps de régénération afin de limiter encore plus l'impact sur l'environnement dû aux émissions de CO₂, et sur le coût du fait de la surconsommation de carburant engendrée pendant cette période de régénération. Ainsi, la phase de régénération peut être arrêtée avant une complète désorption des NOx.

Le module estimateur 61 du système de régénération 60 détermine alors le taux de régénération TR du matériau PNA (étape 152). Pour cela, le module estimateur 61 se base par exemple sur une donnée mesurée au moyen d'un détecteur de NOx 72, disposé en aval du matériau PNA 22, qui quantifie la quantité de NOx désorbés du matériau PNA. A partir de cette donnée et d'une modélisation prenant en compte les propriétés du matériau PNA telles que sa formulation, ses capacités de stockage, et/ou son âge par exemple, le module estimateur 61 détermine le taux de régénération du matériau (étape 152).

La quantité de NOx désorbés, mesurée par le détecteur de NOx 72, permet en outre à l'unité de commande 63 du système de régénération d'ajuster la quantité Q[NH₃] de réactif de réduction sélective à injecter par le biais de l'injecteur 51, pour pouvoir traiter non seulement les NOx émis par le moteur à l'instant t, mais également les NOx supplémentaires issus de la désorption du matériau PNA (étape 153).

Le taux de régénération TR du matériau PNA ainsi déterminé est alors comparé, par le module comparateur 62, à une valeur seuil TRs de taux de régénération (étape 154). On peut en effet prévoir d'arrêter le chauffage avant une régénération complète du matériau PNA. On peut aussi prévoir qu'à partir de ce seuil de régénération TRs, le chauffage est arrêté dès lors que la température des gaz d'échappement dépasse la température seuil de désorption pendant une durée seuil prédéfinie (étapes 155 à 158). Dans ce cas, un incrément de temps préalablement initialisé à zéro (étape 151) est incrémenté (étape 155), et la température Tg des gaz d'échappement, qui est mesurée en permanence par le ou les capteurs de température 75, est à nouveau comparée à la température seuil maximum Tmax correspondant à la température seuil de désorption du matériau PNA (étape 156). Si la température Tg des gaz devient supérieure à cette valeur seuil Tmax de température et le reste pendant une durée Δt supérieure à une durée seuil Δts prédéfinie, par exemple 5 secondes, alors l'unité de commande 63 ordonne immédiatement l'arrêt du chauffage de la ligne d'échappement 80 (étapes 157 - 158). Dans ce cas, le reste des NOx contenus dans le PNA peut être désorbés naturellement sans besoin de chauffage supplémentaire.

La valeur de la durée seuil Δts est par exemple prédéfinie à partir d'une modélisation en tenant compte de l'âge du matériau PNA. Cette durée seuil augmente en effet en fonction de l'âge du matériau PNA, dont l'efficacité diminue avec le temps.

Le système de régénération d'un matériau PNA adsorbeur de NOx, qui vient d'être décrit, permet donc de régénérer le matériau PNA lorsqu'il sature et que le catalyseur SCR est actif, de sorte que tous les NOx qui sont désorbés peuvent être traités par le catalyseur SCR. Le système de régénération permet donc une destruction totale des NOx par le système de dépollution PNA-SCR de la ligne d'échappement. La régénération du matériau PNA par chauffage de la ligne d'échappement est provoquée uniquement lorsque toutes les conditions sont réunies, afin d'éviter des surconsommations trop importantes de carburant et de limiter les émissions de CO₂ provoquées par un tel chauffage. Ce système de régénération permet donc de diminuer le coût de la régénération par la baisse de la surconsommation et de diminuer l'impact environnemental.

## Revendications

1. Système (60) de régénération d'un matériau PNA adsorbeur d'oxydes d'azote NOx (22) disposé dans une ligne d'échappement (80), en amont d'un catalyseur de réduction sélective SCR (30), ledit matériau adsorbeur PNA formant avec ledit catalyseur SCR un système de dépollution PNA-SCR apte à éliminer des oxydes d'azote NOx contenus dans des gaz d'échappement (81) émis par un moteur (10) à combustion interne dans ladite ligne d'échappement (80), ledit système comprenant :
• un module estimateur (61) apte à déterminer un taux de destruction (Td[NOx]), par ledit système de dépollution PNA-SCR, des NOx émis par ledit moteur (10),
• un module comparateur (62) apte à comparer le taux de destruction (Td[NOx]) déterminé à une valeur de taux seuil (Tds),
• une unité de commande (63) apte à commander une mise en chauffe de ladite ligne d'échappement (80) en fonction du résultat de la comparaison, telle que lorsque le chauffage de la ligne d'échappement est activé,
**caractérisé en ce que** ladite unité de commande est apte à déterminer le taux de régénération (TR) du matériau PNA, et apte à ajuster une quantité de réactif de réduction sélective à injecter dans la ligne d'échappement (80) en fonction de ce taux de régénération (TR) pour permettre une élimination des NOx désorbés vers le catalyseur SCR.

2. Système de régénération selon la revendication 1, **caractérisé en ce que** le module estimateur (61) estime le taux de destruction (Td[NOx]) des NOx à partir de données fournies par des capteurs (71, 73) de contrôle et/ou à partir d'une modélisation établie en fonction d'un taux de NOx émis par le moteur (10) et d'un taux de NOx émis en sortie de la ligne d'échappement (80).

3. Système de régénération selon l'une des revendications 1 à 2, **caractérisé en ce que** le module estimateur (61) est en outre apte à déterminer la température (Tg) des gaz d'échappement (81) à partir de données fournies par au moins un capteur (75) de contrôle et /ou à partir d'une modélisation, ledit module comparateur (62) est en outre apte à comparer ladite température (Tg) des gaz à une première valeur seuil minimum (Tmin) correspondant à une température d'activation du catalyseur SCR (30), et à une deuxième valeur seuil maximum (Tmax) correspondant à une température seuil de désorption du matériau PNA, et **en ce que** l'unité de commande (63) est apte à commander le chauffage de la ligne d'échappement en fonction du résultat des comparaisons.

4. Procédé de régénération d'un matériau PNA adsorbeur d'oxydes d'azote NOx (22) disposé dans une ligne d'échappement (80), en amont d'un catalyseur de réduction sélective SCR (30), ledit matériau adsorbeur PNA formant avec ledit catalyseur SCR un système de dépollution PNA-SCR apte à éliminer des oxydes d'azote NOx contenus dans des gaz d'échappement (81) émis par un moteur (10) à combustion interne dans ladite ligne d'échappement (80), ledit procédé consistant à stocker les NOx dans le matériau adsorbeur PNA en dessous d'une température seuil de désorption et à chauffer périodiquement la ligne d'échappement à une température supérieure à ladite température seuil de désorption dudit matériau adsorbeur PNA, afin de le régénérer, ledit procédé comprenant en outre les étapes suivantes :
• déterminer (110) un taux de destruction (Td[NOx]), par ledit système de dépollution PNA-SCR, des NOx émis par ledit moteur (10),
• comparer (120) le taux de destruction (Td[NOx]) déterminé à une valeur de taux seuil (Tds),
• en fonction du résultat de la comparaison, activer (150) une mise en chauffe de ladite ligne d'échappement (80) à une température supérieure à ladite température seuil de désorption (Tmax) du matériau PNA afin de désorber les NOx vers le catalyseur SCR (30) pour être détruits,
**caractérisé en ce que**, lorsque le chauffage de la ligne d'échappement est activé, une étape supplémentaire (152) consiste à déterminer le taux de régénération (TR) du matériau PNA, et à ajuster une quantité de réactif de réduction sélective à injecter dans la ligne d'échappement (80) en fonction de ce taux de régénération (TR) pour permettre une élimination des NOx désorbés vers le catalyseur SCR.

5. Procédé de régénération selon la revendication 4, **caractérisé en ce qu'**il comprend en outre les étapes suivantes :
• déterminer (130) la température (Tg) des gaz d'échappement,
• comparer (131, 132) la température (Tg) des gaz d'échappement préalablement déterminée à une première valeur seuil minimum (Tmin) correspondant à une température d'activation du catalyseur SCR (30), et à une deuxième valeur seuil maximum (Tmax) correspondant à ladite température seuil de désorption du matériau PNA (22),
• en fonction du résultat des comparaisons, activer (150) le chauffage de la ligne d'échappement.

6. Procédé de régénération selon l'une des revendications 4 à 5, **caractérisé en ce que** la température (Tg) des gaz d'échappement est déterminée à partir de l'un au moins des moyens suivants : une modélisation de la température des gaz dans la ligne d'échappement, une mesure de la température des gaz dans la ligne d'échappement, une modélisation du débit des gaz dans la ligne d'échappement, une mesure du débit des gaz dans la ligne d'échappement.

7. Procédé de régénération selon l'une des revendications 4 à 6, **caractérisé en ce que** lorsque le taux de régénération (TR) atteint une valeur seuil (TRs) de régénération (154) et que la température (Tg) des gaz d'échappement est supérieure à ladite température (Tmax) de désorption pendant une durée seuil (Δts) prédéfinie, le chauffage de la ligne d'échappement (80) est désactivé (158).

8. Procédé de régénération selon l'une des revendications 4 à 7, **caractérisé en ce que** la valeur seuil (Tds) de taux de destruction de NOx est prédéterminée à partir d'une modélisation établie en fonction de l'un au moins des paramètres suivants : âge du matériau PNA, âge du catalyseur SCR, capacités de stockage du matériau PNA, distance parcourue depuis la dernière régénération du matériau PNA.

9. Véhicule automobile comprenant un moteur (10) à combustion interne et une ligne d'échappement (80) des gaz émis par ledit moteur, ladite ligne d'échappement comprenant au moins un matériau PNA adsorbeur d'oxydes d'azote NOx (22) disposé en amont d'un catalyseur de réduction sélective SCR (30), selon le sens d'écoulement des gaz dans ladite ligne d'échappement, ledit véhicule automobile étant **caractérisé en ce qu'**il comprend en outre un système de régénération selon l'une des revendications 1 à 3, apte à mettre en oeuvre le procédé de régénération selon l'une des revendications 4 à 8.

## Patentansprüche

1. System (60) zur Regeneration eines Materials PNA eines Adsorbers für Stickstoffoxide NOx (22), das in einem Abgasstrang (80) stromaufwärts eines Katalysators zur selektiven Reduktion SCR (30) angeordnet ist, wobei das adsorbierende Material PNA mit dem Katalysator SCR ein PNA-SCR-Reinigungssystem bildet, das geeignet ist, um Stickstoffoxide NOx, die in Abgasen (81), die von einer Brennkraftmaschine (10) in den Abgasstrang (80) abgegeben werden, zu eliminieren, wobei das System Folgendes umfasst:
• ein Schätzermodul (61), das geeignet ist, um die Zerstörungsrate (Td[NOx]) durch das PNA-SCR-Reinigungssystem der von der Brennkraftmaschine (10) abgegebenen NOx zu bestimmen,
• ein Vergleichsmodul (62), das geeignet ist, um die festgelegte Zerstörungsrate (Td[NOx]) mit einem Ratenschwellenwert (Tds) zu vergleichen,
• eine Steuereinheit (63), die geeignet ist, um ein Heizen des Abgasstrangs (80) in Abhängigkeit von dem Resultat des Vergleichs derart zu steuern, dass das Heizen des Abgasstrangs aktiviert wird,
**dadurch gekennzeichnet, dass** die Steuereinheit geeignet ist, um die Regenerationsrate (TR) des Materials PNA zu bestimmen und geeignet ist, um eine Reagensmenge zur selektiven Reduktion anzupassen, die in den Abgasstrang (80) in Abhängigkeit von dieser Regenerationsrate (TR) einzuspritzen ist, um ein Eliminieren der zu dem Katalysator SCR desorbierten NOx zu erlauben.

2. Regenerationssystem nach Anspruch 1, **dadurch gekennzeichnet, dass** das Schätzermodul (61) die Zerstörungsrate (Td[NOx]) der NOx ausgehend von Daten schätzt, die von Prüfsensoren (71, 73) geliefert werden, und/oder ausgehend von einer Modellierung, die in Abhängigkeit von einer NOx-Rate, die von dem Motor (10) abgegeben wird, und einer NOx-Rate, die am Ausgang des Abgasstrangs (80) abgegeben wird, zu schätzen.

3. Regenerationssystem nach einem der Ansprüche 1 bis 2, **dadurch gekennzeichnet, dass** das Schätzermodul (61) außerdem geeignet ist, die Temperatur (Tg) der Abgase (81) ausgehend von Daten zu bestimmen, die von mindestens einem Prüfsensor (75) geliefert werden, und/oder ausgehend von einer Modellierung, wobei das Vergleichsmodul (62) außerdem geeignet ist, um die Temperatur (Tg) der Gase mit einem ersten Mindestschwellenwert (Tmin), der einer Aktivierungstemperatur des Katalysators SCR (30) entspricht, zu vergleichen, und mit einem zweiten maximalen Schwellenwert (Tmax), der einer Desorptionschwellentemperatur des Materials PNA entspricht, und dass die Steuereinheit (63) geeignet ist, um das Heizen des Abgasstrangs in Abhängigkeit von dem Resultat der Vergleiche zu steuern.

4. Regenerationsverfahren eines Materials PNA zur Adsorption von Stickstoffoxiden NOx (22), das in einem Abgasstrang (80) stromaufwärts eines Katalysators zur selektiven Reduktion SCR (30) angeordnet ist, wobei das adsorbierende Material PNA mit dem Katalysator SCR ein PNA-SCR-Reinigungssystem bildet, das geeignet ist, um Stickstoffoxide NOx, die in Abgasen (81), die von einer Brennkraftmaschine (10) in den Abgasstrang (80) abgegeben werden, enthalten sind, zu eliminieren, wobei das Verfahren darin besteht, die NOx in dem adsorbierenden Material PNA unter einer Desorptionsschwellentemperatur zu lagern und periodisch den Abgasstrang auf eine Temperatur zu heizen, die höher ist als die Desorptionsschwellentemperatur des adsorbierenden Materials PNA, um es zu regenerieren, wobei das Verfahren außerdem die folgenden Schritte umfasst:
• Bestimmen (110) einer Zerstörungsrate (Td[NOx]) durch das PNA-SCR-Reinigungssystem der NOx, die von der Maschine (10) abgegeben werden,
• Vergleichen (120) der festgelegten Zerstörungsrate (Td[NOx]) mit einem Ratenschwellenwert (Tds),
• in Abhängigkeit von dem Resultat des Vergleichs, Aktivieren (150) eines Heizens des Abgasstrangs (80) auf eine Temperatur, die höher ist als die Desorptionsschwellentemperatur (Tmax) des Materials PNA, um die NOx zu dem Katalysator SCR (30) zu desorbieren, um zerstört zu werden, **dadurch gekennzeichnet, dass**, wenn das Heizen des Abgasstrangs aktiviert wird, ein zusätzlicher Schritt (152) darin besteht, die Regenerationsrate (TR) des Materials PNA zu bestimmen und eine Reagensmenge zur selektiven Reduktion, die in den Abgasstrang (80) einzuspritzen ist, in Abhängigkeit von dieser Regenerationsrate (TR) anzupassen, um ein Eliminieren der zu dem Katalysator SCR desorbierten NOx zu erlauben.

5. Regenerationsverfahren nach Anspruch 4, **dadurch gekennzeichnet, dass** es außerdem die folgenden Schritte umfasst:
• Bestimmen (130) der Temperatur (Tg) der Abgase,
• Vergleichen (131, 132) der Temperatur (Tg) der Abgase, die zuvor bestimmt wurde, mit einem ersten Mindestschwellenwert (Tmin), der einer Aktivierungstemperatur des Katalysators SCR (30) entspricht, und mit einem zweiten maximalen Schwellenwert (Tmax), der dem Desorptionsschwellenwert des Materials PNA (22) entspricht,
• in Abhängigkeit von dem Resultat der Vergleiche, Aktivieren (150) des Heizens des Abgasstrangs.

6. Regenerationsverfahren nach einem der Ansprüche 4 bis 5, **dadurch gekennzeichnet, dass** die Temperatur (Tg) der Abgase ausgehend von mindestens einem der folgenden Mittel bestimmt wird: eine Modellierung der Temperatur der Gase in dem Abgasstrang, ein Messen der Temperatur der Gase in dem Abgasstrang, eine Modellierung des Durchsatzes der Gase in dem Abgasstrang, eine Messung des Durchsatzes der Gase in dem Abgasstrang.

7. Regenerationsverfahren nach einem der Ansprüche 4 bis 6, **dadurch gekennzeichnet, dass**, wenn die Regenerationsrate (TR) einen Regenerationsschwellenwert (TRs) (154) erreicht, und die Temperatur (Tg) der Abgase während einer vorbestimmten Schwellendauer (Δst) größer ist als die Desorptionstemperatur (Tmax), das Heizen des Abgasstrangs (80) deaktiviert wird (158).

8. Regenerationsverfahren nach einem der Ansprüche 4 bis 7, **dadurch gekennzeichnet, dass** der Schwellenwert (Tds) der NOx-Zerstörungsrate ausgehend von einer Modellierung vorbestimmt wird, die in Abhängigkeit von mindestens einem der folgenden Parameter erstellt wird: Alter des Materials PNA, Alter des Katalysators SCR, Lagerkapazität des Materials PNA, seit der letzten Regeneration des Materials PNA zurückgelegte Strecke.

9. Kraftfahrzeug, das eine Brennkraftmaschine (10) und einen Abgasstrang (80) der Gase, die von der Brennkraftmaschine abgegeben werden, umfasst, wobei der Abgasstrang mindestens ein Material PNA zum Adsorbieren von Stickstoffoxiden NOx (22) umfasst, das stromaufwärts eines Katalysators zur selektiven Reduktion SCR (30) entlang der Strömungsrichtung der Gase in dem Abgasstrang angeordnet ist, Kraftfahrzeug **dadurch gekennzeichnet, dass** es außerdem ein Regenerationssystem nach einem der Ansprüche 1 bis 3 umfasst, das geeignet ist, um das Regenerationsverfahren nach einem der Ansprüche 4 bis 8 umzusetzen.

## Claims

1. A system (60) for regeneration of a PNA nitrogen oxides NOx adsorber material (22) arranged in an exhaust line (80), upstream of a selective catalytic reduction SCR catalytic converter (30), said PNA adsorber material forming with said SCR catalytic converter a PNA-SCR decontamination system able to eliminate nitrogen oxides NOx contained in exhaust gases (81) emitted by an internal combustion engine (10) into said exhaust line (80), said system including:
• an estimating module (61) able to determine a level of destruction (Td[NOx]), by said decontamination system PNA-SCR, of the NOx emitted by said engine (10),
• a comparator module (62) able to compare the level of destruction (Td[NOx]) determined against a threshold level value (Tds),
• a control unit (63) able to control a heating of said exhaust line (80) as a function of the result of the comparison, such as when the heating of the exhaust line is activated,
**characterized in that** said control unit is able to determine the level of regeneration (TR) of the PNA material, and is able to adjust a quantity of selective reduction reagent to be injected into the exhaust line (80) as a function of this rate of regeneration (TR) to permit an elimination of the desorbed NOx towards the SCR catalytic converter.

2. The system for regeneration according to Claim 1, **characterized in that** the estimating module (61) estimates the level of destruction (Td[NOx]) of the NOx from data supplied by monitoring sensors (71, 73) and/or from a modelling established as a function of a level of NOx emitted by the engine (10) and of a level of NOx emitted at the outlet of the exhaust line (80).

3. The system for regeneration according to one of Claims 1 to 2, **characterized in that** the estimating module (61) is in addition able to determine the temperature (Tg) of the exhaust gases (81) from data supplied by at least one monitoring sensor (75) and/or from a modelling, said comparator module (62) is in addition able to compare said temperature (Tg) of the gases against a first minimum threshold value (Tmin) corresponding to an activation temperature of the SCR catalytic converter (30), and a second maximum threshold value (Tmax) corresponding to a threshold temperature of desorption of the PNA material, and **in that** the control unit (63) is able to control the heating of the exhaust line as a function of the result of the comparisons.

4. A method for regeneration of a PNA nitrogen oxides NOx adsorber material (22) arranged in an exhaust line (80), upstream of a selective catalytic reduction SCR catalytic converter (30), said PNA adsorber material forming with said SCR catalytic converter a PNA-SCR decontamination system able to eliminate nitrogen oxides NOx contained in exhaust gases (81) emitted by an internal combustion engine (10) into said exhaust line (80), said method consisting in storing the NOx in the PNA adsorber material below a desorption threshold temperature and in periodically heating the exhaust line to a temperature greater than said desorption threshold temperature of said PNA adsorber material, so as to regenerate it, said method including in addition the following steps:
• determining (110) a level of destruction (Td[NOx]), by said PNA-SCR decontamination system, of the NOx emitted by said engine (10),
• comparing (120) the determined level of destruction (Td[NOx]) against a threshold level value (Tds),
• as a function of the result of the comparison, activating (150) a heating of said exhaust line (80) to a temperature greater than said desorption threshold temperature (Tmax) of the PNA material so as to desorb the NOx towards the SCR catalytic converter (30) so as to be destroyed,
**characterized in that** when the heating of the exhaust line is activated, a supplementary step (152) consists in determining the level of regeneration (TR) of the PNA material, and in adjusting a quantity of selective reduction reagent to be injected into the exhaust line (80) as a function of this level of regeneration (TR) to permit an elimination of the desorbed NOx towards the SCR catalytic converter.

5. The method for regeneration according to Claim 4, **characterized in that** it includes in addition the following steps:
• determining (130) the temperature (Tg) of the exhaust gases,
• comparing (131, 132) the previously determined temperature (Tg) of the exhaust gases against a first minimum threshold value (Tmin) corresponding to an activation temperature of the SCR catalytic converter (30), and a second maximum threshold value (Tmax) corresponding to said desorption threshold temperature of the PNA material (22),
• as a function of the result of the comparisons, activating (150) the heating of the exhaust line.

6. The method for regeneration according to one of Claims 4 to 5, **characterized in that** the temperature (Tg) of the exhaust gases is determined from at least one of the following means: a modelling of the temperature of the gases in the exhaust line, a measurement of the temperature of the gases in the exhaust line, a modelling of the flow of the gases in the exhaust line, a measurement of the flow of the gases in the exhaust line.

7. The method for regeneration according to one of Claims 4 to 6, **characterized in that** when the level of regeneration (TR) reaches a threshold value (TRs) of regeneration (154) and the temperature (Tg) of the exhaust gases is greater than said desorption temperature (Tmax) for a predefined threshold duration (Δts), the heating of the exhaust line (80) is deactivated (158).

8. The method for regeneration according to one of Claims 4 to 7, **characterized in that** the threshold value (Tds) of level of destruction of NOx is predetermined from a modelling established as a function of at least one of the following parameters: age of the PNA material, age of the SCR catalytic converter, storage capacities of the PNA material, distance covered from the last regeneration of the PNA material.

9. A motor vehicle including an internal combustion engine (10) and an exhaust line (80) of the gases emitted by said engine, said exhaust line including at least one PNA nitrogen oxides NOx adsorber material (22) arranged upstream of a selective catalytic reduction SCR catalytic converter (30), along the direction of flow of the gases in said exhaust line, said motor vehicle being **characterized in that** it includes in addition a system for regeneration according to one of Claims 1 to 3, able to implement the method for regeneration according to one of Claims 4 to 8.
